# EUROPEAN PATENT APPLICATION

(11) **EP 3 621 030 A1**
(43) Date of publication of application: **11.03.2020**
(21) Application number: 18192642.9
(22) Date of filing: 05.09.2018
(51) Int. Cl.: G06T 7/10

(54) **COMPUTER IMPLEMENTED METHOD AND SYSTEM FOR PROCESSING OF MEDICAL IMAGES**

(71) Applicant: RaySearch Laboratories AB, 103 65 Stockholm (SE)
(72) Inventor: Andersson, Sebastian, 118 24 Stockholm (SE)

(57) **Abstract**

The present disclosure relates to a computer implemented method (10) for improving segmentation of medical images of a body part. The method is based on an idea that a first parametrized segmentation function F1, which is configured to learn to segment unsegmented or partially segmented images by comparison with labelled segmented images, can be supplemented with an identical second parametrized segmentation function which, by having its parameters updated based on historical parameters of F1, can generate supplementary segmented images for F1 to train on.

The present disclosure further relates to corresponding systems and computer program product. The present disclosure additionally relates to a method for segmentation of a patient image of a body part using said parametrized segmentation functions F1, F2.

## Description

### TECHNICAL FIELD

The present disclosure relates to computer vision. In particular, the present disclosure relates to computer implemented methods and systems for processing medical images.

### BACKGROUND

Medical images, such as three-dimensional CT or MRI images, sometimes need to be segmented. Segmentation of organs and/or tissues at risk is for example an important part of radiation therapy.

Segmentation of an image refers to the process of defining or reconstructing different internal structures, as well as a patient outline, in an image. The structures, or "Regions of Interest" (ROIs), could be for example specific internal organs identifiable in the images. Segmented ROIs are often represented as solid or translucent objects in the three-dimensional images so as to be viewable, and possibly also able to be manipulated, for a user. Segmentation of medical images is usually required for example in the field of radiotherapy treatment planning since target volumes (e.g. tumors) and "Organs at Risk" (OARs) must be defined and outlined in the images in order to facilitate planning of a treatment using a Treatment Planning System (TPS).

Structures can be manually segmented in the images using various tools, such as tools for drawing contours in CT slices. However, such manual segmentation is cumbersome and time-consuming. Especially in the field of adaptive radiotherapy, where the shape and/or position of structures may have to be adjusted during the course of the treatment, the segmentation of ROIs might constitute a major part of a treatment planning process. Therefore, many automatic or semi-automatic methods for segmenting ROIs in medical images have been proposed.

Some of these are based on the use of templates or "atlases" comprising medical images with already segmented structures (e.g. internal organs). The structures are transferred into the new, and not yet segmented, medical image of a subject (hereinafter denoted "patient image" in contrast to an "atlas image") and adapted to the new geometry. These methods are often referred to as "atlas-based segmentation". An advantage of such methods is that the work previously done segmenting the atlas image is re-utilized when segmenting the patient image.

Another technique used is Model Based Segmentation, MBS. MBS tries to fit an organ or tissue model based on image gradients. The MBS technique seems to be well suited when there are strong gradients in the images defining the boundaries of the organs and when tissue is homogeneous.

### SUMMARY

An object of the present invention is to provide improved computer implemented methods and systems for segmentation of medical images.

The present invention relates to a computer implemented method for improving segmentation of medical images of a body part.

The computer implemented method comprises a step of obtaining a set of medical images with and without ground truth segmentations. The method further comprises a step of obtaining a first parameterized segmentation function, F1. The first parameterized segmentation function is adapted for segmentation of medical images. The method further comprises a step of obtaining a second parameterized segmentation function, F2. The second parameterized segmentation function is identical to the first segmentation function. The method further comprises a step of processing each medical image of the medical image set to update the parameters of the first parameterized segmentation function F1. For each iteration processing comprises when the image has at least one ground truth segmentation, determining a first penalty P1 based on a comparison of the respective ground truth segmentation with a corresponding segmentation from the first parameterized segmentation function, F1. The processing comprises for each iteration at least when at least a part of the image is without ground truth: segmenting the image using the first parameterized segmentation function, F1, segmenting, the image using the second parameterized segmentation function, F2, and determining a second penalty P2 based on a comparison of the segmentation using the first parameterized segmentation function F1 and the segmentation using the second parameterized segmentation function F2. The processing comprises further for each iteration updating the parameters of the first parameterized segmentation function F1 based on the determined first and/or second penalties P1 and P2. The parameters of the second parameterized function F2 are then updated based on the updated first parameterized segmentation function, F1, and a plurality of previous versions of the first parameterized function, F1, when available, said updating being performed after each iteration, after iteration of a subset of the image set or after iteration of the entire image set.

Thus, a parametrized function is built, which can segment region of interests in a medical image.

The first and the second penalties relate characteristically to a segmentation similarity.

By building the parameterized segmentation function using penalties relating to segmentation similarity a parameterized segmentation function is built which, when used for segmentation of patient images, provides information related to where the regions of interest are. Coordinate data relating to regions of interest of patient images may be obtained when applying the herein described parameterized segmentation function to patient images.

The learning process in building the parameterized segmentation model is performed without requirements of a large amount of labelled data. By loosing the requirement for having a large amount of labelled data, it is possible to use large data sets during training, i.e. the process of updating parameters of the parametrized segmentation functions, without having people doing large amounts of manual work (to assign labels) prior to using the disclosed method. In other words, this means that the need for human input is reduced. The process can then be made automatic or at least semi-automatic.

The automatic or semi-automatic process results in that the processing speed for processing new images is increased. Thereby, for example, an effective clinical workflow can be achieved.

In using the about method for building a parameterizes segmentation function, ROI segmentation results are improved by apart from using patient image data with corresponding ROI segmentations also use patient image data where one, some or all segmentations are missing.

By updating the second parametrized segmentation function, F2, based on the updated first parameterized segmentation function, F1, and a plurality of previous versions of the first parameterized segmentation function, F1, a robust parameterized segmentation function is obtained. The parameterized segmentation function has a low sensitivity to deviations or abnormalities in the images or sets of images used for building the parameterized segmentation function, as a plurality of versions of the first parameterized model are used in updating the second parameterized segmentation function. At the same time, the method allows for using information in all available images.

The comparison(s) may be made in different ways. For example, the comparison(s) may be made by for each voxel calculate the difference between the ground truth segmentation and the corresponding segmentation in accordance with the first parameterized function F1 for each ROI and/or for each voxel calculate the difference between segmentation in accordance with the second parameterized function F2 and segmentation in accordance with the first parameterized functions F1 for each ROI.

Another comparison can be to calculate the Dice similarity coefficient (DSC) between the ground truth segmentation and the corresponding segmentation in accordance with the first parameterized function F1 for each ROI and/or to calculate the DSC similarity coefficient between segmentation in accordance with the second parameterized function F2 and segmentation in accordance with the first parameterized functions F1 for each ROI.

The present disclosure further relates to a computer program product comprising computer readable code means which when run in a processor will cause the processor to perform the method as defined above.

An embodiment of the present disclosure further relates to a system for improving segmentation of medical images of a body part. The system comprises a processing element. The processing element is arranged to receive a set of medical images with and without ground truth segmentations, obtain a first parameterized segmentation function, F1, said first parameterized segmentation function being adapted for segmentation of medical images, obtain a second parameterized segmentation function, F2, said second parameterized segmentation function being identical to the first segmentation function, and process each medical image of the medical image set to update the parameters of the first parameterized segmentation function F1. For each iteration processing comprises: determining, when the image has at least one ground truth segmentation, a first penalty P1 based on a comparison of the respective ground truth segmentation with a corresponding segmentation from the first parameterized segmentation function, F1; at least when at least a part of the image is without ground truth segmentation segmenting the image using the first parameterized segmentation function, F1, segmenting, the image using the second parameterized segmentation function, F2, and determining a second penalty P2 based on a comparison of the segmentation using the first parameterized segmentation function F1 and the segmentation using the second parameterized segmentation function F2. The processing comprises further to, for each iteration updating the parameters of the first parameterized segmentation function F1 based on the determined first and/or second penalties P1 and P2. The processing comprises further updating the parameters of the second parameterized function F2 based on the updated first parameterized segmentation function, F1, and a plurality of previous versions of the first parameterized function, F1, when available, said updating being performed after each iteration, after iteration of a subset of the image set or after iteration of the entire image set.

The present disclosure further relates to a computer implemented method for segmentation of a patient image of a body part. The method comprises the steps of obtaining a second parametrized segmentation function using the computer implemented method for improving segmentation of medical images of a body part. The method further comprises a step of obtaining a patient image of a body part, and segmenting the obtained patient image of the body part based on the obtained second parametrized segmentation function.

### BRIEF DESCRIPTION OF THE DRAWINGS

Figure 1 illustrates an example of a medical image comprising a plurality of regions of interest;
Figure 2 illustrates an example of a medical image comprising a plurality of regions of interest where at least some of the regions of interest are provided with a ground truth segmentation;
Figures 3a and 3b are flow charts illustrating an example of a computer-implemented method for improving segmentation of medical images of a body part;
Figure 4 is an example of a computer-implemented method for improving segmentation of medical images of a body part;
Figure 5 is a flow chart illustrating an example of a computer-implemented method for segmentation of a patient image of a body part; and
Figure 6 is a block scheme illustrating an example of a system for improving segmentation of medical images of a body part.

### DETAILED DESCRIPTION

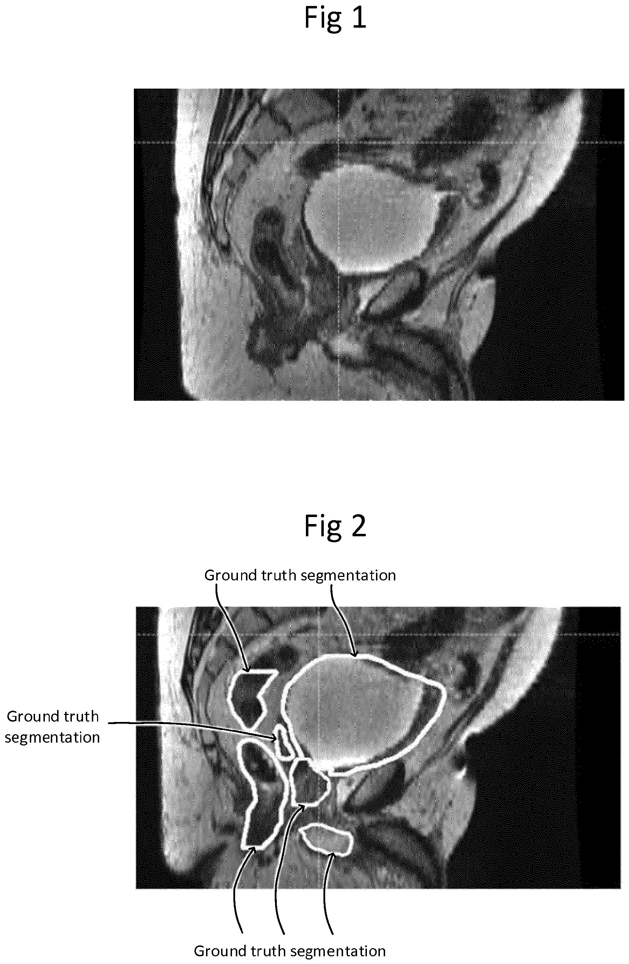

Figure 1 illustrates an example of a medical image 1, which has not been segmented. The medical image is for example a three-dimensional CT or MRI image or ultrasonic image.

The medical image comprises different internal structures, such as organs and/or tissues. These structures are characteristically denoted Regions of Interest (ROIs).

Figure 2 illustrates an example of a segmented medical image 2. The medical image of the illustrated example corresponds to the medical image of figure 1. Segmentation of an image refers to the process of defining or reconstructing the different Regions of Interest (ROIs). The segmentation may also comprise defining or reconstructing a patient outline in an image.

The segmented ROIs are in the illustrated figure represented as solid or translucent objects in the three-dimensional images so as to be viewable, and possibly also able to be manipulated, for a user.

Segmentation of medical images is for example an important part of radiation therapy. The segmentation of medical images is usually required for example in the field of radiotherapy treatment planning. Radiotherapy treatment planning comprises characteristically the steps of defining and outlining in the images target volumes (e.g. tumors) and "Organs at Risk" (OARs). Thereby, planning of a treatment may be facilitated using a Treatment Planning System (TPS).

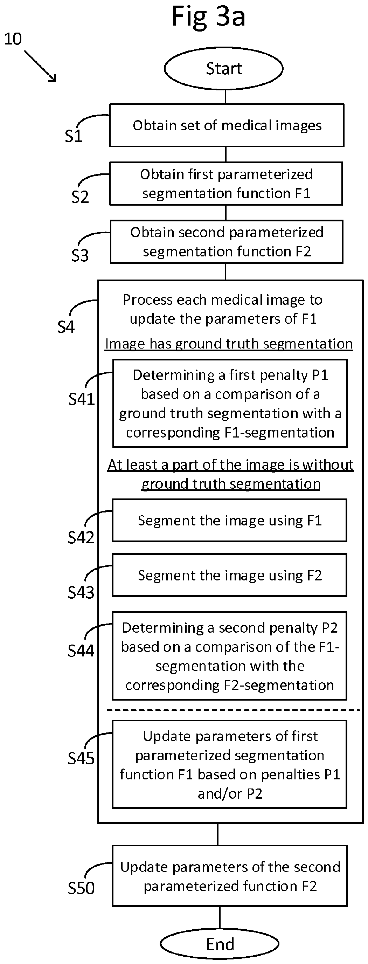

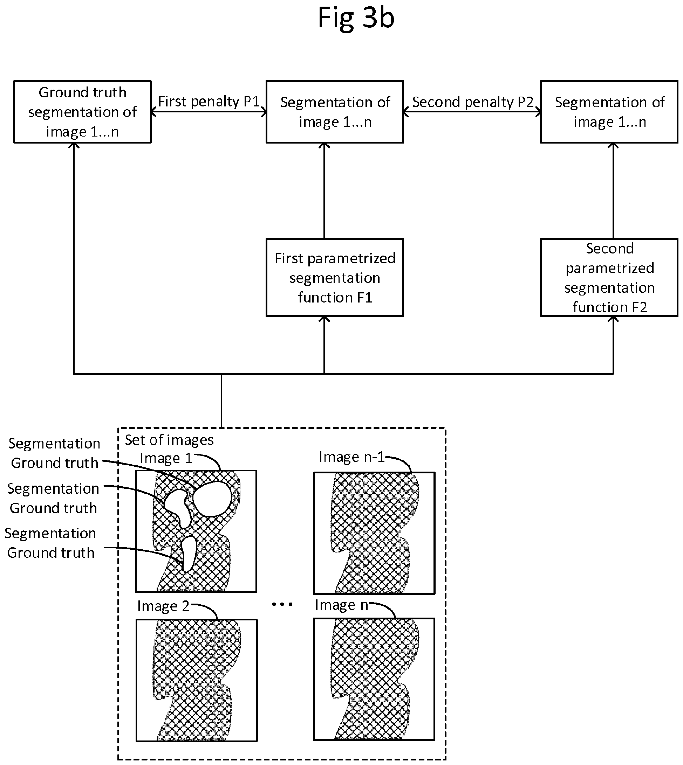

In Fig 3a, a computer implemented method 10 for improving segmentation of medical images of a body part is illustrated. Reference will simultaneously be given to Fig 3b, for clarification of some method steps and ideas.

Recently, the use of deep learning techniques has been of increased interest for recognition of medical images. Deep learning has historically required large data sets. However, large amounts of labelled medical data is currently unavailable or at least it is a time consuming task to obtain labelled data. Thus, the lack of large amounts of labelled image data for use by (convolutional) neural networks in deep learning forms an obstacle in improving segmentation of images of tissue/organs.

The inventors of the present disclosure have realised that state-of-the art image classification technology such as object recognition can be altered from taking an input image and identifying objects to taking a (medical) input image an generating a segmented image. The parametrized image generation can then be used to interact with one or more copies of itself (or similar) as part of a training method for gradual improvement of the segmented image quality of the generated segmented images, as described in more detail above and below.

One of the main ideas of the present disclosure is to augment the training of a first parametrized image segmentation function F1, which is primarily intended to update its parameters (i.e. "learn" to segment images) by comparison with ground truth segmented images, with a second parametrized segmentation function F2 that uses historical training results of F1 (in the form of previously obtained parameters of F1, such as weights and biases of an artificial neural network) in order to provide segmented images to which segmented images generated with F1 can be compared. In other words, F2 provides F1 with additional artificial segmented images to which F1 can compare its segmented images; the set of images that F1 can be trained on can thereby be greatly expanded, which in turn reduces the need for images with ground truth segmentation.

The method comprises a step S1 of obtaining a set of medical images. The images may comprise images with ground truth segmentation and images without ground truth segmentations. This is illustrated in Fig 3b as n number of images, wherein the first image, image 1, is exemplified as having ground truth segmentation. The ground truth segmentation is provided in advance. The ground truth segmentation may be provided manually, in a semi-automatic process or in an automatic process.

Thus, the method for improving segmentation of medical images may when building models used in in segmentation of medical images characteristically use both images with ground truth segmentation and images without ground truth segmentation. This drastically increases the amount of images which may be used when building the models.

The segmentations may comprise segmentation of at least one region of interest comprising for example a tissue and/or a tumour and/or an organ. The at least one region of interest may comprise a target and and/or an Organ at Risk, OAR.

The method further comprises a step of obtaining S2 a first parameterized segmentation function, F1. The first parameterized segmentation function F1 is adapted for segmentation of medical images.

The first parametrized segmentation function F1 may be an artificial neural network, e.g. a convolutional neural network, CNN.

The method further comprises a step of obtaining S3 a second parameterized segmentation function, F2. The second parameterized segmentation function F2 is identical to the first parameterized segmentation function. The term "identical" is here not limited to the first and second parametrized segmentation functions F1 and F2 having identical architectures, wherein only parameter values may differ, but is meant to also include different architectures performing the same function. For instance, the second parametrized segmentation function F2 may differ from the first segmentation function F1 in that the second parametrized segmentation function F2 comprises more parameters than the first parametrized segmentation function F1 (or vice versa). Additional parameters of F2 with respect to F1, such as weights and biases in an artificial neural network, may then be set (and kept) to zero. In other examples, additional parameters may be interpolated, e.g. based on average of a set of predetermined parameters.

The first and the second parameterized segmentation functions F1 and F2 may be based on at least one convolutional neural network. The convolutional neural network architecture may be a so called U-net architecture.

The parameters of the first parametrized segmentation function F1 may initially be set to random values having a predetermined distribution. The predetermined distribution may be different for different parameter subsets. For instance, the weights in different layers of an artificial neural network may be initialized using different distributions. Alternatively, the parameters of the first parametrized segmentation function may be set to parameters from an identical architecture which has already been trained to some extent, e.g. according to the disclosed method for a different set of images, or for a different purpose such as image recognition. The parameters of the second parametrized segmentation function F2 may initially be obtained by copying the parameters of the first parametrized segmentation function F1.

With the parametrized segmentation functions F1, F2 in place, segmented images can be generated and compared to images of the set of medical images in order to tune the parameters of F1 (and F2).

Thus, the method further comprises a step of processing S4 each medical image of the medical image set to update the parameters of the first parameterized segmentation function F1 based on the medical images of the medical image set.

As described above, the parameters of F1 can be updated based on comparisons between segmented images generated by F1 and images from the set of medical images having ground truth segmentation. Specifically, when the image has at least one ground truth segmentation, the method comprises determining S41 a first penalty P1 based on a comparison of the respective ground truth segmentation with a corresponding segmentation from the first parameterized segmentation function, F1.

The first penalty P1 may be a measure of correlation between the respective ground truth segmentation with a corresponding segmentation from the first parameterized segmentation function, F1. In other words, according to some aspects, the determination of the first penalty P1 comprises calculating a difference between the ground truth segmentation and the corresponding segmentation in accordance with the first parameterized function F1 for a plurality of points and forming the first penalty P1 based on said calculated differences.

The plurality of points comprises pixels or voxels. Stated differently, the first penalty P1 may be based on correlation between pixels or voxels between the respective ground truth segmentation with the corresponding segmentation from the first parameterized segmentation function F1.

Alternatively, the determination of the first penalty P1 comprises determining a Dice, DSC, similarity or the like between the ground truth segmentation and the corresponding segmentation in accordance with the first parameterized function F1. The DSC is also known by other names, including Sørensen-Dice index, Sørensen index and Dice's coefficient, and variations including the "similarity coefficient" or "index".

If the medical image lacks ground truth segmentation or only comprises partial ground truth segmentation, the second parametrized segmentation function F2 may be used to generate segmented images to which those generated by F1 may be compared.

Thus, at least when at least a part of the image is without ground truth segmentation, the method comprises segmenting S42 the image using the first parameterized segmentation function, F1. The method further comprises segmenting S43 the image using the second parameterized segmentation function, F2. The method also comprises determining S44 a second penalty P2 based on a comparison of the segmentation using the first parameterized segmentation function F1 and the segmentation using the second parameterized segmentation function F2.

Segmenting S42, S43 the image using either of the first or the second parametrized segmentation function F1, F2 may involve adding noise to the computation. For instance, noise can be added to the medical image input.

The second penalty P2 may be determined using the same methods as those used to determine P1. In other words, according to some aspects, the determination of the second penalty P2 comprises calculating a difference between segmentation in accordance with the second parameterized function F2 and segmentation in accordance with the first parameterized functions F1 for a plurality of points and forming the second penalty P2 based on said calculated differences. The plurality of points may comprise pixels or voxels.

Alternatively, the determination of the first penalty P2 comprises determining a Dice similarity or the like between the ground truth segmentation and the corresponding segmentation in accordance with the first parameterized function F1.

According to some aspects, the first penalty P2 is determined based on an expected distance between the prediction of the first parametrized function F1, i.e. the segmentation image generated by the first parametrized function F1 based on the input medical image (and possibly also added noise), and the prediction of the second parametrized function F2 (and possibly also added noise).

The second penalty P2 may also be determined even if the medical image being processed has ground truth segmentation.

With the first and second penalties P1, P2 determined, an error measure or measure of difference between a generated segmentation and expected segmentation is obtained. The first and second penalties P1, P2 may therefore be used to adjust the parameters of F1 (and subsequently F2). In the context of artificial neural networks, training methods such as stochastic gradient descent, SGD, the Adam optimization algorithm, the resilient backpropagation algorithm, Rprop or the Broyden-Fletcher-Goldfarb-Shanno, BFGS, algorithm; backpropagation may be used in computing gradients. Alternatively, an evolutionary algorithm may be used to adjust the parameters of F1.

Thus, the method further comprises updating S45 the parameters of the first parameterized segmentation function F1 based on the determined first and/or second penalties P1 and P2.

With the parameters for F1 updated, the parameters of F2 can be updated based on the updated parameters of F1.

In other words, the method also comprises updating S50 the parameters of the second parameterized function F2 based on the updated first parameterized segmentation function, F1, and a plurality of previous versions of the first parameterized function, F1, when available, said updating being performed after each iteration, after iteration of a subset of the image set or after iteration of the entire image set.

The parameters of the second parametrized function F2 may for instance be updated S50 by averaging corresponding parameters of the first parametrized function F1 over consecutive sets of parameters for the first parametrized function F1. In other words, every time the parameters of the first parametrized function F1 are updated, they are stored, possibly up to a predetermined number of update iterations. The set of parameters of the second parametrized function F2 can then be formed by taking an average over a moving window of parameters for the first parametrized function F1, e.g. the last ten sets of parameters for the first parametrized function F1.

The average may be a weighted average. For instance, the parameters of the second parametrized function F2 may be updated as an exponential moving average of the parameters of the first parametrized function F1.

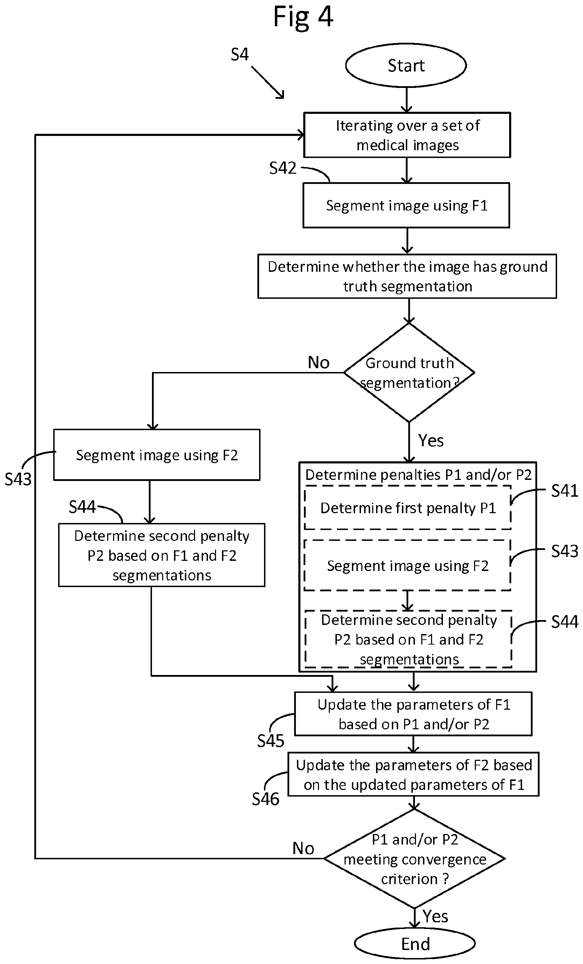

Fig 4 illustrates schematically an example of an example of a computer-implemented method for improving segmentation of medical images of a body part. Specifically, Fig 4 illustrates how the (iterative) processing S4 of images in the method illustrated in relation to Figs 3a and 3b may be implemented. Thus, all aspects illustrated in relation to Figs 3a and 3b can apply to the example illustrated in relation to Fig 4, and vice versa. In particular, Fig 4 illustrates how iterations over the set (or subset) of medical images may be implemented in combination with a convergence criterion for updating the parameters of the first and/or second parametrized functions F1, F2.

Initially, first and second parametrized functions F1, F2 are obtained (not shown). The first and second parametrized functions are identical according to one of the manners described in relation to Figs 3a and 3b. For illustrative purposes, the first and second parametrized functions F1, F2 are assumed to be artificial neural networks having the same architecture.

A set of medical images with and without ground truth segmentations is also obtained (not shown). In this example, the method will iterate over a set or a subset, e.g. a designated training set, of the medical images in order to update the parameters of the first and second parametrized functions F1, F2. In the illustrated example, the method may iterate over the set or subset of the medical images several times.

When a medical image to be segmented is chosen, the medical image is segmented using the first parametrized function F1.

It is further determined whether the medical image has ground truth segmentation. By querying to what extent the medical image has ground truth segmentation, unnecessary downstream calculations can be avoided.

If the medical image has ground truth segmentation, segmenting S43 the medical image using the second parametrized function F2 may optionally be skipped and only a first penalty P1 is determined S41. Alternatively, the medical image is also segmented S43 using the second parametrized function F2 and a second penalty P2 is determined S44 based on a comparison of the segmentation using the first parameterized segmentation function F1 and the segmentation using the second parameterized segmentation function F2.

On the other hand, if the medical image has incomplete or no ground truth segmentation, the medical image is segmented S43 using the second parametrized function F2 and a second penalty P2 is determined S44 based on a comparison of the segmentation using the first parameterized segmentation function F1 and the segmentation using the second parameterized segmentation function F2.

The parameters of the first parametrized segmentation function F1 can subsequently be updated S45 based on the first and/or second penalties P1, P2. In case the medical image had ground truth segmentation, the parameters of the first parametrized segmentation function F1 may be updated S45 based on any combination of P1 and P2.

With the parameters of the first segmentation function F1 updated, the parameters of the second segmentation function F2 may be updated S46 based on the updated parameters of first segmentation function F1, e.g. as illustrated in relation to Figs 3a and 3b.

In this example, the method includes a convergence criterion for the first and second penalties P1 and P2. If the first and second penalties show consistently low penalties, this may be taken as an indication that the generated segmentation(s) of the medical images meet a corresponding quality criterion, and the process of updating the parameters of the first and second parametrized segmentation function may be terminated.

Alternatively, the convergence criterion may comprise a predetermined number of images having been processed and/or the parameters of the first and/or second parametrized functions F1, F2 have been updated a predetermined number of times.

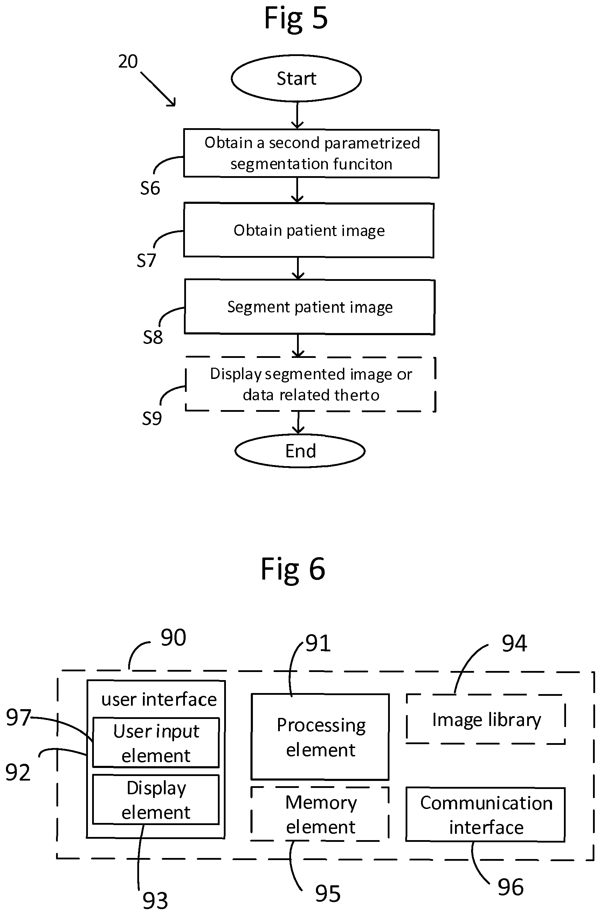

In yet another alternative, the convergence criterion is simply a check whether all images of the chosen set or subset of medical images have been processed S4. In figure 5, a computer implemented method 20 for segmentation of a patient image of a body part is illustrated. The method comprises a step of obtaining S6 a second parametrized segmentation function F2 formed as discussed above. The method further comprises a step of obtaining S7 a patient image of a body part. The method further comprises a step of segmenting S8 the obtained patient image of the body part based on the obtained second parametrized segmentation function.

The computer implemented method may further comprise a step of displaying S9 at least a part of the segmented patient image.

The computer implemented image may further comprise a step of recording S10 coordinates of Regions of Interest, ROI, in the segmented patient image.

In figure 6, an example of a system 90 for improving segmentation of medical images of a body part is illustrated. The system 90 comprises a processing element 91.

The system further comprises a memory element 95. The memory element 95 is arranged to store a computer program product comprising computer readable code means which when run in the processor element 91 will cause the processor to perform at least some of the methods or parts thereof as discussed herein.

The memory element is further arranged to store a parametrized segmentation function and previous versions thereof. The parameterized segmentation function is adapted for segmentation of a patient image of a body part.

The system further comprises or has access to an image library 94. The image library 94 may comprise images of a body part. The image library comprises images having a ground truth segmentation and/or non-segmented images.

The system comprises a function for building a parameterized segmentation function adapted for segmentation of a patient image of the body part.

The image library 94 may comprise images, which have been used for building a parameterized segmentation function adapted for segmentation of a patient image of a body part. The image library 94 may further comprise images, which have at least not yet been used for building the parameterized segmentation function adapted for segmentation of a patient image of a body part.

In order to build the parameterized segmentation function adapted for segmentation of a patient image of the body part, the processing element 91 is arranged to receive a set of images with and/or without ground truth segmentations. The set of images is for example received from the image library 94. The received image set comprises preferably images which have not been previously used for building the parameterized segmentation function.

Further, the processing element 91 is arranged to obtain a current version of the parameterized segmentation function adapted for segmentation of medical images. The current version of the parametrized segmentation function is in the illustrated example stored in and provided from the memory element 95. The obtained current version of the parameterized segmentation function is denoted as the first parameterized segmentation function, F1.

Further, the processing element 91 is arranged to obtain a second parameterized segmentation function, F2. The second parameterized segmentation function F2 is identical to the first segmentation function, F1. Thus, the processing element 91 is arranged to obtain a copy of the first segmentation function, F1.

The processing element 91 is arranged to process each medical image of the medical image set to update the parameters of the first parameterized segmentation function F1. For each iteration the processing comprises the following.
- When the image has at least one ground truth segmentation, the processing element 91 is arranged to determine a first penalty P1 based on a comparison of the respective ground truth segmentation with a corresponding segmentation from the first parameterized segmentation function, F1.
- At least when at least a part of the image is without ground truth segmentation, the processing element is arranged to segmenting the image using the first parameterized segmentation function, F1, segmenting, the image using the second parameterized segmentation function, F2, and determining a second penalty P2 based on a comparison of the segmentation using the first parameterized segmentation function F1 and the segmentation using the second parameterized segmentation function F2 and
- updating the parameters of the first parameterized segmentation function F1 based on the determined first and/or second penalties P1 and P2, and

The processing element is further arranged to update the parameters of the second parameterized function F2 based on the updated first parameterized segmentation function, F1, and a plurality of previous versions of the first parameterized function, F1, when available. The updating is performed after each iteration, after iteration of a subset of the image set or after iteration of the entire image set.

The system 90 further or instead comprises a function for segmentation of a patient image of a body part. In order to execute this function, the processing element 91 is arranged to obtain a patient image of the body part. The patient image may be obtained via an interface 92. The patient image may for example be obtained from an interface 92 to a CT scan or a MRI or an ultrasound image capturing apparatus (not shown). The patient image may be obtained from the image library 94.

The processing element 91 is further arranged to obtain a parameterized segmentation function from the memory element 95. The obtained parameterized segmentation function is characteristically the latest update of the parameterized segmentation function as built by the parameterized segmentation building function.

The processing element 91 is further arranged to segment the obtained patient image of the body part based on the obtained parametrized segmentation function.

The processing element may be arranged obtain data relating to the segmented image. The data may for example comprise coordinates of Regions Of Interest, ROI, etc.

The processing element may be arranged feed the patient image as segmented to the image library 94. The processing element may be arranged to feed also the obtained data relating to the segmented image to the image library. In one example, the patient image, segmented patient image and obtained data relating to the segmented image. The processing element may be arranged to feed also user input data associated to the segmented image to the image library.

The system may further comprise a user input element arranged for user input of the information relating to the segmented image.

The system 90 further comprises a display element 93. The display element 93 may be arranged to display at least a part of the segmented image. The display element 93 may further be arranged to display information related to the segmented image, such as coordinates of Regions Of Interest, ROI, etc. The display element may be arranged to display the user input of information relating to the segmented image.

## Claims

**1.** Computer implemented method (10) for improving segmentation of medical images of a body part, said method comprising the steps of:
obtaining (S1) a set of medical images with and without ground truth segmentations,
obtaining (S2) a first parameterized segmentation function, F1, said first parameterized segmentation function being adapted for segmentation of medical images,
obtaining (S3) a second parameterized segmentation function, F2, said second parameterized segmentation function being identical to the first segmentation function,
processing (S4) each medical image of the medical image set to update the parameters of the first parameterized segmentation function F1, wherein for each iteration processing comprises:
determining (S41), when the image has at least one ground truth segmentation, a first penalty P1 based on a comparison of the respective ground truth segmentation with a corresponding segmentation from the first parameterized segmentation function, F1
at least when at least a part of the image is without ground truth segmentation
• segmenting (S42) the image using the first parameterized segmentation function, F1,
• segmenting (S43), the image using the second parameterized segmentation function, F2, and
• determining (S44) a second penalty P2 based on a comparison of the segmentation using the first parameterized segmentation function F1 and the segmentation using the second parameterized segmentation function F2 and
updating (S45) the parameters of the first parameterized segmentation function F1 based on the determined first and/or second penalties P1 and P2, and
updating (S50) the parameters of the second parameterized function F2 based on the updated first parameterized segmentation function, F1, and a plurality of previous versions of the first parameterized function, F1, when available, said updating being performed after each iteration, after iteration of a subset of the image set or after iteration of the entire image set.

**2.** The computer implemented method wherein the first and the second penalty relates to a segmentation similarity.

**3.** The computer implemented method according to claim 1, wherein the first and the second parameterized segmentation functions F1 and F2 are based on at least one convolutional neural network.

**4.** The computer implemented method according to any of the preceding claim, wherein the determination of the first penalty P1 comprises calculating a difference between the ground truth segmentation and the corresponding segmentation in accordance with the first parameterized function F1 for a plurality of points and forming the first penalty P1 based on said calculated differences.

**5.** The computer implemented method according to any of the preceding claim, wherein the determination of the second penalty P2 comprises calculating a difference between segmentation in accordance with the second parameterized function F2 and segmentation in accordance with the first parameterized functions F1 for a plurality of points and forming the second penalty P2 based on said calculated differences.

**6.** The computer implemented method according to claim 4 or 5, wherein the plurality of points comprises pixels or voxels.

**7.** The computer implemented method according to any of the preceding claims, wherein the determination (S41) of the first penalty P1 comprises determining a Dice similarity or the like between the ground truth segmentation and the corresponding segmentation in accordance with the first parameterized function F1.

**8.** The computer implemented method according to any of the preceding claims, wherein the determination (S44) of the second penalty P2 comprises determining a Dice similarity or the like between segmentation in accordance with the second parameterized function F2 and segmentation in accordance with the first parameterized functions F1.

**9.** The computer implemented method according to any of the preceding claims, wherein the medical image is a CT scan or a MRI or an ultrasound image.

**10.** The computer implemented method according to any of the preceding claims, wherein the segmentation comprises segmentation of at least one region of interest comprising for example a tissue and/or a tumour and/or an organ.

**11.** The computer implemented method according to claim 8, wherein the at least one region of interest comprises a target and and/or an Organ at Risk, OAR.

**13.** A computer program product comprising computer readable code means which when run in a processor will cause the processor to perform the method according to any one of the preceding claims.

**14.** System for improving segmentation of medical images of a body part, said system comprising a processing element arranged to
receive a set of medical images with and without ground truth segmentations,
obtain a first parameterized segmentation function, F1, said first parameterized segmentation function being adapted for segmentation of medical images,
obtain a second parameterized segmentation function, F2, said second parameterized segmentation function being identical to the first segmentation function,
process each medical image of the medical image set to update the parameters of the first parameterized segmentation function F1, wherein for each iteration processing comprises:
determining, when the image has at least one ground truth segmentation, a first penalty P1 based on a comparison of the respective ground truth segmentation with a corresponding segmentation from the first parameterized segmentation function, F1
at least when at least a part of the image is without ground truth segmentation
• segmenting the image using the first parameterized segmentation function, F1,
• segmenting, the image using the second parameterized segmentation function, F2, and
• determining a second penalty P2 based on a comparison of the segmentation using the first parameterized segmentation function F1 and the segmentation using the second parameterized segmentation function F2 and
updating the parameters of the first parameterized segmentation function F1 based on the determined first and/or second penalties P1 and P2, and
updating the parameters of the second parameterized function F2 based on the updated first parameterized segmentation function, F1, and a plurality of previous versions of the first parameterized function, F1, when available, said updating being performed after each iteration, after iteration of a subset of the image set or after iteration of the entire image set.

**15.** Computer implemented method (20) for segmentation of a patient image of a body part, said method comprising the steps of:
obtaining (S20) a second parametrized segmentation function using the method according to any of the claims 1-13,
obtaining (S21) a patient image of a body part, and
segmenting (S22) the obtained patient image of the body part based on the obtained second parametrized segmentation function.

**16.** The computer implemented method according to claim 15, further comprising a step of displaying (S23) at least a part of the segmented image.

**17.** The computer implemented method according to claim 15 or 16, further comprising a step of recording (S24) coordinates of Regions of Interest, ROI, in the segmented image.
